Europäisches Patentamt

European Patent Office

Office européen des brevets

(11) Publication number: 0 394 591 A2

# EUROPEAN PATENT APPLICATION

(21) Application number: 89312603.7

(22) Date of filing: 04.12.89

(51) Int. Cl.⁵: G01N 27/90, G21C 17/00

(30) Priority: 24.04.89 US 342210

(43) Date of publication of application:
31.10.90 Bulletin 90/44

(84) Designated Contracting States:
BE CH DE FR LI

(71) Applicant: THE BABCOCK & WILCOX
COMPANY
1010 Common Street, P.O. Box 60035
New Orleans, Louisiana 70160(US)

(72) Inventor: Fasnacht, Floyd Abraham
114 Londonberry Road
Forest Virginia 24551(US)
Inventor: Klahn, Francis Charles
Route 2 Box 199
Huddleston Virginia 24104(US)
Inventor: Griffith, John Carroll
219 Windingway Road
Lynchburg Virginia 24502(US)

(74) Representative: Purvis, William Michael
Cameron et al
D. Young & Co. 10 Staple Inn
London WC1V 7RD(GB)

(54) Rotatable eddy current roller head.

(57) A rotatable eddy current roller head (10) for inspecting tubing has a main body portion (12) with a set of whisker wheels (38, 40, 42) rotatably attached thereto to centre the main body portion (12) in the tube. A roller housing (16) slidably mounted on the main body portion (12) for radial movement relative thereto is caused to track the surface of the tube by opposing magnets (44) mounted in the main body portion (12) and in the roller housing (16). An eddy current coil (20) is mounted in a coil holder (18) which is pivotally mounted in an offset manner at the exterior end of the roller housing (16). A spring (52) mounted in the roller housing (16) biases the trailing edge of the coil holder (18) against the inner surface of the tube to maintain the eddy current coil (20) at a constant distance from the inner surface of the tube during inspection procedures.

FIG. 1

## ROTATABLE EDDY CURRENT ROLLER HEAD

The invention relates generally to nondestructive testing and more particularly to a rotatable eddy current roller head to inspect steam generator tubes.

Steam generators used in energy production are generally of the straight tube or U-tube design. Coolant from a nuclear reactor travels through the tubes and transfers heat to a secondary coolant in the steam generator. Due to the serious consequences which would result from a tube leak, the tubes are inspected for defects on a routine basis. These routine inspections typically use a bobbin eddy current coil.

Based on the routine examination, an advanced inspection technique carried out by the use of a coil in a rotating eddy current probe inside the tubes may be performed. The probe may be in contact with or near the surface of the tube and is rotated as it moves through the tube. This results in a helical inspection path for the coil. In the preferred method of inspection, the coil must be maintained in continuous close proximity with the tube's inner surface to obtain inspection results which accurately indicate the presence of flaws in the tubing. In addition to problems encountered with surface irregularity, U-tube designs present higher frictional drag in the bent portion of the tube and a cross section which is more oval in shape than round. Previous proposals for detecting defects in tubular members include:

Patent Specification US-A-4,675,604 which discloses a device for detecting defects which includes an electromagnet for magnetizing the internal surface of a tubular member. The electromagnet is radially supported on rollers.

Patent Specification US-A-2,684,464 which discloses a hollow shaft which is mounted on bearing members so as to be rotatable independently of the bearing members. A detector head is mounted to a support member attached to the shaft so as to be in close proximity to the inner bore surface of the tubular member to be inspected.

Patent US-A-3,443,211 which discloses the use of a magnetic inspection device with a non-contacting calliper having no movable parts that is pulled along the surface of the inspected member.

Patent Specification US-A-3,091,319 which discloses an electromagnet carried by a resilient distortable carriage constructed to urge the electromagnet toward the inner wall of the tube.

Patent Specification US-A-4,625,165 which discloses a rotating head which carries a transversely slidably sensing member. Readings are taken only as the probe is pulled back towards the open end of the tube through which it was inserted.

According to one aspect of the invention there is provided a rotatable eddy current roller head for inspecting tubing, comprising:

a. a main body portion;

b. means for centring the main body portion in tubing being inspected;

c. a roller housing slidable mounted in the main body portion;

d. means for causing the roller housing to track the inner surface of the tube being inspected;

e. an eddy current coil pivotally mounted in the roller housing; and

f. means for maintaining the eddy current coil at a constant distance from the surface of the tube being inspected.

According to another aspect of the invention there is provided a rotatable eddy current roller head for inspecting tubing, comprising:

a. a main body portion;

b. means for centring the main body portion in tubing being inspected;

c. a roller housing slidable mounted in the main body portion;

d. means for causing the roller housing to track the inner surface of the tube being inspected;

e. a coil holder pivotally mounted at one end of the roller housing;

f. an eddy current coil mounted in the coil holder, and

g. means for maintaining the eddy current coil at a constant distance from the surface of the tube being inspected.

According to a further aspect of the invention there is provided a rotatable eddy current roller head for inspecting tubing, comprising:

a. a main body portion;

b. at least one whisker wheel rotatably mounted adjacent each end of the main body portion and sized to cause the main body portion to be centred in the tubing;

c. a roller housing slidable mounted in the main body portion;

d. opposing magnets mounted in the main body portion and in the roller housing to bias the roller housing outwardly and cause it to track the inner surface of the tube being inspected;

e. a coil holder pivotally mounted in an offset manner at one end of the roller housing;

f. an eddy current coil mounted in the coil holder; and

g. means for maintaining the eddy current coil at a constant distance from the surface of the tube being inspected.

Such a roller head can be incorporated in an inspection device which can overcome previously encountered problems of difficult rotation, difficulty in tracking the curvature of the tube inner surface, and tendency of the inspection coil to rock away from the inner surface of the tube due to varying geometry and frictional forces.

Thus the eddy current coil can be held in close proximity to the inside of a tube being inspected by the repulsion of small magnets. The coil holder can be freely hinged on a pin which also serves as an axle for two rollers and can be biased by a spring so that it follows the tube surface angle and maintains the coil axis close to perpendicular to the inner surface of the tube. The entire head can rotate in bearings on a set of whisker wheels that serve to keep the head substantially centred in the tube.

The invention is diagrammatically illustrated by way of example in the accompanying drawings, in which;-

Figure 1 is a cutaway view of a rotatable eddy current roller head according to the invention;

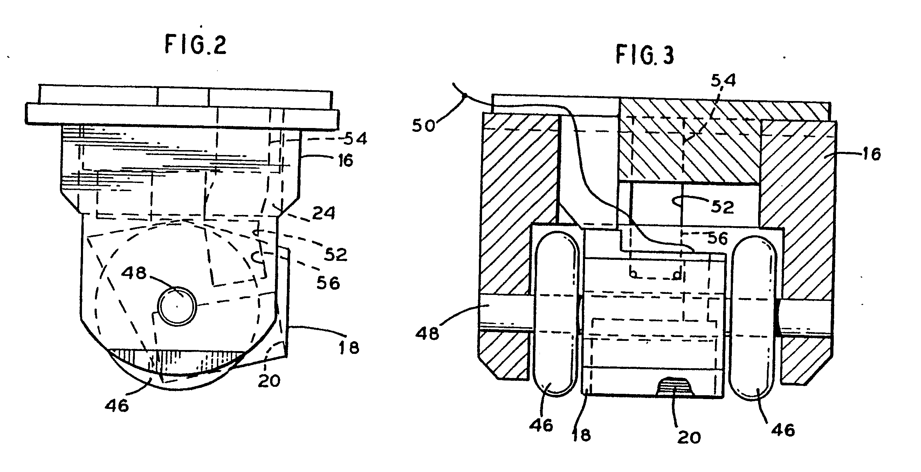

Figure 2 is a side view of a roller housing of the roller head of Figure 1; and

Figure 3 is a front view of the roller housing of Figure 2.

Referring to the drawings, a rotatable eddy current roller head generally comprises a main body portion 12, means 14 for centring the main body portion 12 in the tube being inspected, a roller housing 16, a coil holder 18, an eddy current coil 20, means 22 for causing the roller housing 16 to track the inner surface of the tube being inspected, and means 24 for maintaining the eddy current coil 20 at a constant distance from the surface of the tube being inspected.

The main portion 12 is inserted into the tube to be inspected and rotated by a driving tool 26. For ease of illustration only the end of the driving tool 26 that connects to roller head 10 is shown as a variety of driving tools are available. The main body portion 12 has first and second ends 28, 30 which are narrower than a middle portion 32 for the purposes of receiving the means 14 for centring the main body portion 12. The first end 28 can be engaged for driving engagement with the driving tool 26. An end cap 34 is fastened at the second end 30 by any suitable fastening means such as a rivet or bolt 36 and serves to maintain the means 14 in position at the second end 30.

The means 14 for centring the main body portion 12 in the tube being inspected is mounted on the narrowed portions at each end of the main body portion 12. The means 14 is formed from whisker wheels comprising bearings 38, bearing blocks 40, and U-shaped nylon filaments 42. At least two sets of the bearings 38 are rotatably mounted on the main body portion 12, one on each narrowed portion. One of the bearing blocks, 40 is attached to each set of the bearings 38 and serves as a mounting block for the U-shaped nylon filaments 42. At least two of the U-shaped filaments 42 are used at each narrowed portion and extend radially outward substantially opposite each other. The U-shaped filaments 42 are sized according to the diameter of the tube being inspected so as substantially to centre the main body portion 12 therein and are rigid enough to support the main body portion 12 in its centred position during inspection operations.

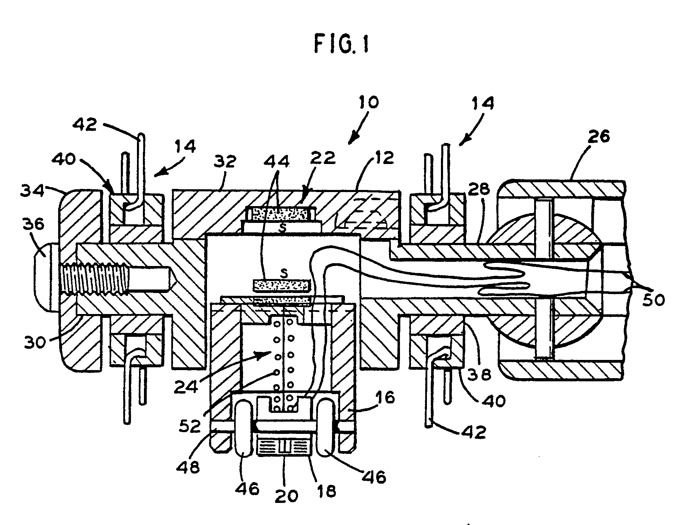

The roller housing 16 is slidable mounted in the main body portion 12 for radial movement relative thereto as can be seen in Figure 1. The means 22 for biasing the roller housing 16 radially outwardly from the main body portion 12, to cause it to track the inner surface of the tube being inspected, is provided in the form of opposing magnets 44. One of the magnets 44 is rigidly mounted in the main body portion 12 and the other magnet is mounted on the interior end of the roller housing 16. The magnets are mounted so that like poles of the magnets face each other. In this manner, the repulsive force generated between the magnets urges the roller housing 16 radially outward. More than two magnets may be used, particularly if the distance between only two magnets would be inadequate to generate the necessary forces. Rollers 46 are rotatably mounted on pin or axle 48 at the exterior end of the roller housing 16 such that their axis of rotation is substantially parallel to the longitudinal axis of the tube being inspected. This provides support and minimal resistance as the roller head 10 is rotated during the inspection process.

The inspection is carried out by the eddy current coil 20 mounted in the coil holder 18. The coil 20 is connected by a wiring harness 50 to equipment (not shown) for creating, processing, and recording signals during inspection. The coil holder 18 surrounds the coil 20 to prevent damage thereto and is pivotally mounted in an offset fashion on the axle 48. Relative to the direction of rotation, the coil 20 is mounted at the rear of the coil holder 18. The means 24 for maintaining the coil 20 at a constant distance from the surface of the tube being inspected is in the form of a spring 52 mounted in bores 54 and 56 provided in the roller housing 16 and the coil holder 18. The bore 56 is provided adjacent the rear end of the coil holder 18. In this manner, pressure from the spring 52 causes the coil holder 18 to pivot backwards. The rear edge of the coil holder 18 rides on the inner surface of the tube being inspected, thus keeping the coil 20 at a constant distance from the surface of the tube.

In operation, the rotating eddy current roller head 10 is attached to the driving device 26 and inserted into a tube to be inspected. The U-shaped filaments 42 position the main body portion 12 in substantially the centre of the tube while it rotates on the bearings 38 in response to rotational torque from the driving device 26. The opposing magnets 44 cause the roller housing 16 to track the surface of the tube by riding on the rollers 46. Pressure from the spring 52 causes the rear of the coil holder 18 to ride along the inner surface of the tube, keeping the eddy current coil 20 at a distance from the inner surface of the tube. The forces from the magnets 44 and the spring 52 both serve to keep the eddy current coil 20 at the constant proper distance from the tube surface to obtain reliable test results. Electronic equipment known in the industry attached to the end of the wiring harness 50 allows the eddy current coil 20 to generate and receive signals which are processed by the equipment as the roller head 10 is pulled through the tube to determine if any defects are present in the tube. In the preferred embodiment the bulk of the roller head parts are fabricated from Delrin R for ease of machinability although any material compatible with steam generator systems and possessing reasonable bearing qualities may be used.

## Claims

1. A rotatable eddy current roller head (10) for inspecting tubing, comprising:
   a. a main body portion (12);
   b. means (14) for centring the main body portion (12) in tubing being inspected;
   c. a roller housing (16) slidable mounted in the main body portion (12);
   d. means (22) for causing the roller housing (16) to track the inner surface of the tube being inspected;
   e. an eddy current coil (20) pivotally mounted in the roller housing (16; and
   f. means (48, 52) for maintaining the eddy current coil at a constant distance from the surface of the tube being inspected.

2. A rotatable eddy current roller head according to claim 1, further comprising a coil holder (18) which surrounds the eddy current coil (20).

3. A rotatable current roller head according to claim 1 or claim 2, wherein the means (14) for centring the main body portion (12) comprises whisker wheels (38, 40, 42) rotatably mounted thereon.

4. A rotatable eddy current roller head according to any one of claims 1 to 3, wherein the means (22) for causing the roller housing (16) to track the inner surface of the tubing comprises opposing magnets (44) mounted in the main body portion (12) and in the roller housing (16).

5. A rotatable eddy current roller head (10) for inspecting tubing, comprising:
   a. a main body portion (12);
   b. means (14) for centring the main body portion (12) in tubing being inspected;
   c. a roller housing (16) slidable mounted in the main body portion (12);
   d. means (22) for causing the roller housing (16) to track the inner surface of the tube being inspected;
   e. a coil holder (18) pivotally mounted at one end of the roller housing (16);
   f. an eddy current coil (20) mounted in the coil holder (18), and
   g. means (48, 52) for maintaining the eddy current coil (20) at a constant distance from the surface of the tube being inspected.

6. A rotatable current roller head according to claim 5, wherein the means (14) for centring the main body portion comprises whisker wheels (38, 40, 42) rotatably mounted thereon.

7. A rotatable eddy current roller head according to claim 5 or claim 6, wherein the means (22) for causing the roller housing (16) to track the inner surface of the tube being inspected comprises opposing magnets (44) mounted in the main body portion (12) and in the roller housing (16)

8. A rotatable eddy current roller head according to any one of claims 5 to 7, wherein the means (48, 52) for maintaining the eddy current coil (20) at a constant distance from the tube surface comprises the coil holder (18) being pivotally mounted in an offset manner and having its trailing edge biased outwardly toward the surface of the tube being inspected.

9. A rotatable eddy current roller head (10) for inspecting tubing, comprising:
   a. a main body portion (12);
   b. at least one whisker wheel (38, 40, 42) rotatably mounted adjacent each end (28, 30) of the main body portion (12) and sized to cause the main body portion (12) to be centred in the tubing;
   c. a roller housing (16) slidable mounted in the main body portion (12);
   d. opposing magnets (44) mounted in the main body portion (12) and in the roller housing (16) to bias the roller housing (16) outwardly and cause it to track the inner surface of the tube being inspected;
   e. a coil holder (18) pivotally mounted in an offset manner at one end of the roller housing (16);
   f. an eddy current coil (20) mounted in the coil holder (18); and
   g. means (40, 52) for maintaining the eddy current coil (20) at a constant distance from the surface of the tube being inspected.

10. A rotatable eddy current roller head according to claim 9, wherein the means for maintaining the eddy current coil at a constant distance from the tube surface comprises a spring (52) mounted in the roller housing (16) and which biases the trailing edge of the coil holder (18) toward the surface of the tube being inspected.

11. A rotatable current roller head according to claim 9 or claim 10 further comprising a roller (46) mounted on the roller housing (16) on either side of the coil holder (18).

## FIG. 1

FIG.3

FIG.2